# EUROPEAN PATENT APPLICATION

(11) **EP 3 214 712 A1**
(43) Date of publication of application: **06.09.2017**
(21) Application number: 17156679.7
(22) Date of filing: 17.02.2017
(51) Int. Cl.: H02G 3/08, H02G 15/007, H02G 3/32

(54) **INSTALLATION BOX**

(30) Priority: 01.03.2016 NL 2016345
(71) Applicant: ABB Schweiz AG, 5400 Baden (CH)
(72) Inventor: RENCKENS, Thomas Philippus, 6716 AA EDE (NL)
(74) Representative: Geurts, Franciscus Antonius

(57) **Abstract**

The invention relates to an installation box comprising a housing having a bottom wall and a circumferential wall that is upright from the bottom wall, the circumferential wall having an optionally closed passage opening, wherein the bottom wall and the circumferential wall jointly bound an installation space for electric wiring material, which space is closed off by a cover, wherein the installation box comprises a strain relief above the passage opening, wherein the strain relief comprises two cooperating relief members that are or can be attached to the bottom wall and/or the circumferential wall so as to hinge relative to each other, and that are capable of hinging between an open condition for passing through a cable through the passage opening in a passage direction, and a closed condition in which the relief members cooperate and engage onto the cable.

## Description

### BACKGROUND OF THE INVENTION

The present invention relates to an installation box comprising a housing having a bottom wall and a circumferential wall that is upright from the bottom wall, the circumferential wall having an optionally closed passage opening, wherein the bottom wall and the circumferential wall jointly bound an installation space for electric wiring material, which space is closed off by a cover, wherein the installation box comprises a strain relief above the passage opening.

Such installation boxes are used in electric wirings in commercial and industrial building or in machinery. Cables that are part of the electric wiring need to be connected to each other, and generally speaking this takes place in the installation box by means of splices. The strain relief serves to prevent inadvertent removal of the cable(s) from the installation box. A known strain relief is a cable gland.

A drawback of the known installation boxes with cable glands, is that the cable gland needs to be tightened. Whether this was done correctly is hard to see from a distance. In case a cable gland has not been tightened, the cable installed can easily be removed from the installation box as a result thereof, for instance ripping the splices apart when doing so.

It is an object of the invention to provide an installation box including strain relief the condition of which can easily be verified.

### SUMMARY OF THE INVENTION

According to a first aspect, the invention provides an installation box comprising a housing having a bottom wall and a circumferential wall that is upright from the bottom wall, the circumferential wall having an optionally closed passage opening, wherein the bottom wall and the circumferential wall jointly bound an installation space for electric wiring material, which space is closed off by a cover, wherein the installation box comprises a strain relief above the passage opening, wherein the strain relief comprises two cooperating relief members that are or can be attached to the bottom wall and/or the circumferential wall so as to hinge relative to each other, and that are capable of hinging between an open condition for inserting a cable through the passage opening in a passage direction, and a closed condition in which the relief members cooperate and engage onto the cable, wherein the strain relief comprises a slider insert piece which is to be placed in front of the passage opening in a sliding direction substantially parallel to the circumferential wall and/or perpendicular to the bottom wall.

An advantage of the present invention is that by attaching the relief members of the strain relief to the installation box so as to hinge, the relief members are being moved in the direction of the cable by the hinging motion. In that way, it is properly visible whether the strain relief is in the open condition or in the closed condition. The risk of the strain relief not being attached properly or not at all is thus removed, or at least considerably reduced. The strain relief can be placed as a separate part in front of one of the passage openings according to need.

In one embodiment, the relief members are capable of hinging about a hinge axis that is parallel to the main plane of the bottom wall and/or the circumferential wall to which the relief members have been or can be attached. An advantage of this embodiment is that in the open condition of the relief members the strain relief has a shape corresponding with an open mouth. Said shape facilitates passing the cable through, because the cable is led to the passage opening in the wall of the installation box. Once the cable has been introduced into the installation box, the strain relief can be closed.

In one embodiment, the relief members are capable of hinging about a hinge axis that is substantially diagonal to the main plane of the bottom wall of the installation box. An advantage of this embodiment is that the relief members can be in the open condition without being hindered by an adjacent strain relief or, for instance, a wall to which the installation box has been attached.

In one embodiment, the relief members have walls that are complementary to each other for in the closed condition enveloping the cable in circumferential direction. In addition, it is advantageous that the complementary walls are cone-shaped in the closed condition. An advantage thereof is that the relief members of the strain relief are being placed around the cable, as a result of which easy attachment of the cable to the installation box is effected.

In one embodiment, at least one of the relief members is provided with a clamping part for clamping a cable inside the strain relief when the relief members are in the closed condition. In one embodiment thereof, the clamping part is a resilient clamping part for clamping the cable inside the strain relief, so that a force-closed engagement onto the cable can be effected.

In one embodiment, a clamping part is provided on the wall of each of the relief members, which clamping part projects to the inside relative to the wall in order to engage the cable inside the strain relief from more than one side. In that way, a proper engagement onto the cable in the strain relief can be effected.

In one embodiment, the clamping part is formed by a clamping base for attaching the clamping part to the respective relief member, and one or more resilient clamping fingers that are connected to the clamping base for clamping the cable inside the strain relief, wherein the one or more clamping fingers are oriented parallel to each other with a free outer end. In that way, a proper engagement onto cables of various outer diameters can be effected.

In one embodiment, the free outer ends of the one or more clamping fingers of the clamping part of one of the relief members are oriented towards the passage opening and the free outer ends of the one or more clamping fingers of the clamping part of the other of the relief members are oriented away from the passage opening to prevent that the cable inside the strain relief is being pushed in and/or pulled out. In that way, the strain relief can be operative in two directions and therefore counteract pulling the cable out of the installation as well as pushing the cable into the installation box.

In one embodiment, the free outer ends of the one or more clamping fingers are provided with clamping teeth for engaging the cable inside the strain relief.

In one embodiment, when the relief members are in the closed condition, the clamping teeth are oriented transversely relative to the passage direction. The cable sliding relative to the clamping parts is being prevented due to the engagement of the teeth onto the cable.

In one embodiment, the slider insert piece comprises a base body provided with first hinge members for attaching the relief members to the base body so as to hinge relative to each other. It is advantageous then that the relief members are provided with second hinge members for attaching the relief members to the installation box so as to hinge, and that the second hinge members are configured for cooperation with the first hinge members for attaching the relief members to the base body so as to hinge. An advantage thereof is that the relief members can be attached to the housing so as to hinge, by means of the slider insert piece.

In one embodiment, the first hinge members are female hinge members that are bounded by an opening in the base body that can be hooked into, and the second hinge members are hook-shaped male hinge members. In that way, an easy to assemble hinge that can be hooked into, can be formed.

In one embodiment, the first hinge members of the slider insert piece and/or the second hinge members of the relief members ensure hinging about a hinge axis that runs substantially diagonally relative to the sliding direction of the slider insert piece. An advantage of this embodiment is that the relief members are able to hinge without being hindered by a wall to which installation box has been attached or by an adjacent strain relief.

In one embodiment, the relief members are provided with locking elements for locking the mutual cooperation. In one embodiment thereof, the locking elements are provided at or near an upper end of the wall of the relief members opposite to a lower end of the wall oriented towards the housing. In that way, it is prevented that the relief members are pushed apart by the cable present in the strain relief. Moreover, by placing the locking elements the relief members, from their lower end up to their upper end, are kept in the closed condition.

In one embodiment, the locking elements comprise a hook on the first relief member, which hook extends from a longitudinal edge of the wall in the direction of the second relief member, wherein the locking elements comprise a hook edge in the wall of the second relief member. An advantage of this embodiment is that it is reliably prevented that the relief members are pushed apart as a result of a force the cable present in the strain relief exerts on the relief members. A clearly perceptible snapping sound can be produced when doing so.

In one embodiment, the bottom wall and/or the circumferential wall of the housing comprises slider rails along the passage opening, and the slider insert piece comprises a base body having first slider guides that cooperate with the slider rails for sliding the slider insert piece into the slider rails and guiding it in there. An advantage of this embodiment is that the slider insert piece can be used reliably and relatively easily.

In one embodiment, the slider rails end in a locking portion for locking the slider insert piece that has been slid in. In one embodiment thereof, the slider insert piece comprises a locking body that is connected to the base body of the slider insert piece for locking the slider insert piece in the slider rails. An advantage thereof is that it is prevented that the slider insert piece is inadvertently removed from the slider rails or that the strain relief exerts force onto the cover.

In one embodiment, the slider insert piece comprises a slot between the base body and the locking body for forming flexible material bridges between the base body and the locking body. While sliding the slider insert piece in, the first and second slider guides slide in line with each other through the slider rails. At the end of the slider rails the locking body is able to bend in the locking portion, so that the slider insert piece is locked relative to the slider rails.

In one embodiment, the slider insert piece comprises a base body having a passage opening for the cable, wherein an edge that is upright relative to the base body is provided at the periphery of the passage opening. The upright edge advantageously provides reinforcement to the strain relief that is placed at least partially around the upright edge, when the strain relief has been arranged on the slider insert piece.

In one embodiment, the slider insert piece comprises a base body provided with insertion openings, wherein the relief members are provided with teeth cooperating with the insertion openings. An advantage of this embodiment is that it can be counteracted that the relief members are pushed apart, when they are in the closed condition, as a result of a force exerted on the relief members by a cable running through the strain relief.

In one embodiment, the first hinge members and the insertion openings are provided at the periphery of the upright edge, wherein the insertion openings are provided straight opposite each other at the edge, and the first hinge members are provided straight opposite each other at the edge, together in a straight cruciform configuration. In that way, the relief members are supported all around the passage opening.

In one embodiment, the slider insert piece comprises a positioning device with stops for positioning the passage opening of the slider insert piece in front of the passage opening of the housing. An advantage of this embodiment is that the passage opening of the slider insert piece during sliding is placed in the correct position in front of the passage opening of the housing.

In one embodiment, at least one of the passage openings is closed off by a flexible membrane that can be perforated. An advantage of this embodiment is that the cable can be introduced into the box in one single action by puncturing the membrane using an outer end of the cable. A further advantage may be that due to perforating the flexible membrane using the outer end of the cable and the flexible material, a watertight sealing of the membrane relative to the cable can be effected.

In one embodiment, the installation box comprises a water-retaining structure having a bottom wall and a circumferential wall that is upright from the bottom wall, which circumferential wall has an optionally closed passage opening, wherein the water-retaining structure is provided at the interior side of the bottom wall and the circumferential wall of the housing, which side faces the installation space. In one embodiment thereof, the membrane is part of the water-retaining structure. In that way, the installation box can be configured watertight, also at the location of the passage opening.

In one embodiment, the water-retaining structure is manufactured of a soft synthetic material or a thermoplastic elastomer (TPE), wherein the membrane preferably is manufactured of the same material as the water-retaining structure. An advantage thereof is that the interior part including the membrane/membranes can be formed as a single-part unit.

In one embodiment, the housing is made of a synthetic material, for instance, polypropylene (PP), polyethylene (PE) or acrylonitrile butadiene styrene (ABS).

In one embodiment, the installation box is manufactured by means of multi-component injection moulding, preferably 2K injection moulding. An advantage of this embodiment is that the installation box can reliably be manufactured.

In one embodiment, the installation box comprises a blind slider insert piece for closing off a passage opening of the installation box.

The invention further provides a strain relief to be used in an installation box according to the invention.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figure 1A shows an isometric view of an installation box with a housing, a cover and two strain reliefs for cables, according to an embodiment of the invention;
Figure 1B shows an exploded view of an installation box according to figure 1A, in which the presence of an internal water-retaining structure in the housing is visible;
Figures 2A and 2B show the water-retaining structure and the housing of the installation box of figure 1;
Figure 3 shows an isometric view of the installation box of figure 1 with a part of the strain relief;
Figure 4 shows the strain relief according to figure 1 in the closed condition with the cable;
Figure 5 shows the strain relief of figure 4 in the open condition;
Figure 6 shows an exploded view of the strain relief of figures 4 and 5;
Figure 7 shows a partial assembly of the strain relief of figures 4 and 5;
Figures 8A and 8B show separate relief members of the strain relief of figure 5;
Figure 9 shows a side view of the slider insert piece of the strain relief according to figures 4-7;
Figure 10 shows an enlarged depiction of the part of the housing in which the slider insert piece has been slid into; and
Figure 11A shows a front view of the slider insert piece according to figure 4 and figure 11B shows an alternative slider insert piece for the housing according to figure 1, as also shown in figure 1B.

### DETAILED DESCRIPTION OF THE DRAWINGS

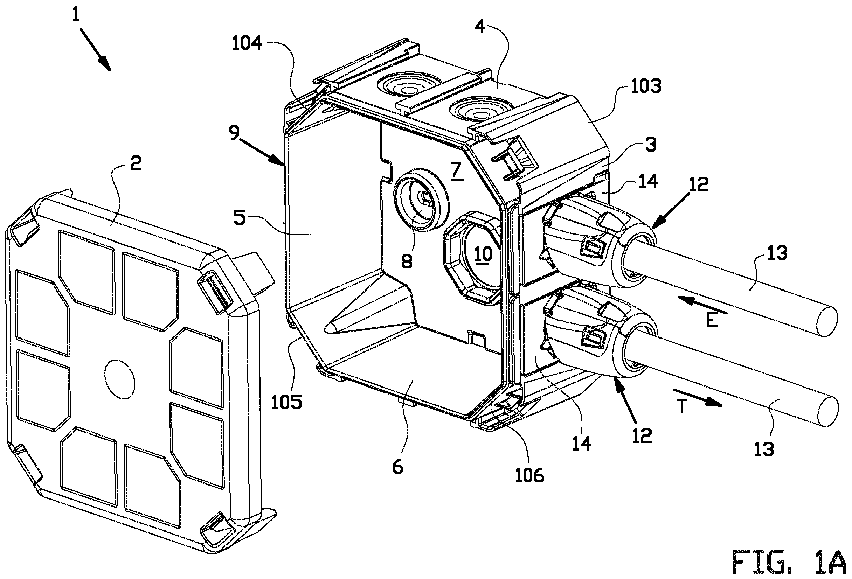

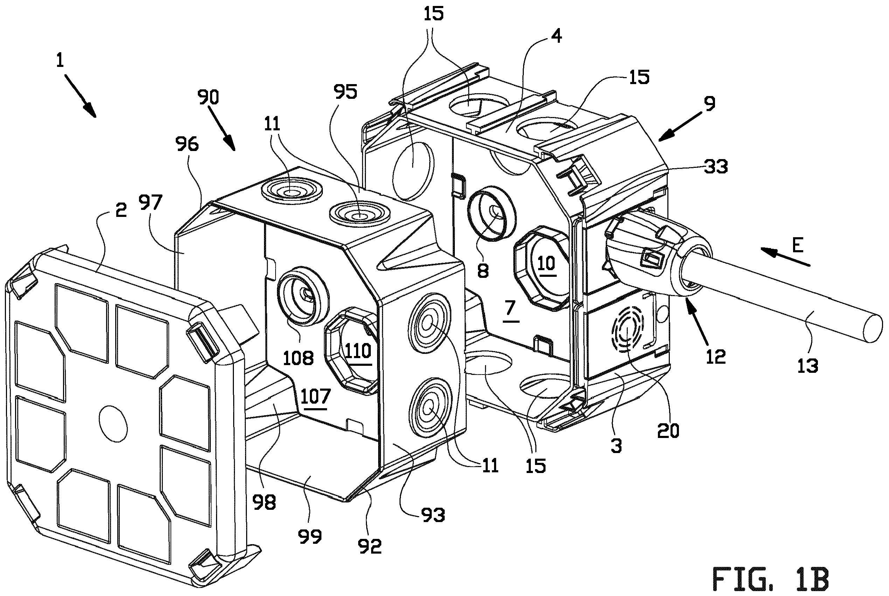

Figures 1A and 1B show a first embodiment of an installation box 1 according to the invention. The installation box 1 comprises a housing 9 having a straight bottom wall 7 and eight straight first and second circumferential walls 3, 103, 4, 104, 5, 105, 6, 106 that are upright from the bottom wall 7, and that are transversely or substantially transversely oriented relative to the bottom wall 7. The bottom wall 7 and the circumferential walls 3, 103, 4, 104, 5, 105, 6, 106 form one unity. The first circumferential walls 3, 4, 5, 6 are connected such to the second circumferential walls 103, 104, 105, 106 arranged at an angle thereto, that in top view a regular octagonal shape has been formed. The bottom wall 7 and the circumferential walls 3, 103, 4, 104, 5, 105, 6, 106 jointly bound an installation space for electric wiring material, such as conductor splices with which the cores of cables 13 are connected to each other. The installation space can be closed off by a cover 2, which for instance by means of a snap connection (not shown) can be attached to the housing 9 of the installation box 1.

Figure 1A shows that two cables 13 terminate at the installation box 1. For each cable 13 a strain relief 12 having two relief members 12a, 12b and a slider insert piece 14 or insert piece has been used, which will be further elucidated below. The strain relief 12 is intended for securing the cables 13 to the installation box 1. The slider insert piece 14 serves to slide in or insert the strain relief 12 in the housing 9 so that the strain relief can be placed in accordance with the user's wishes.

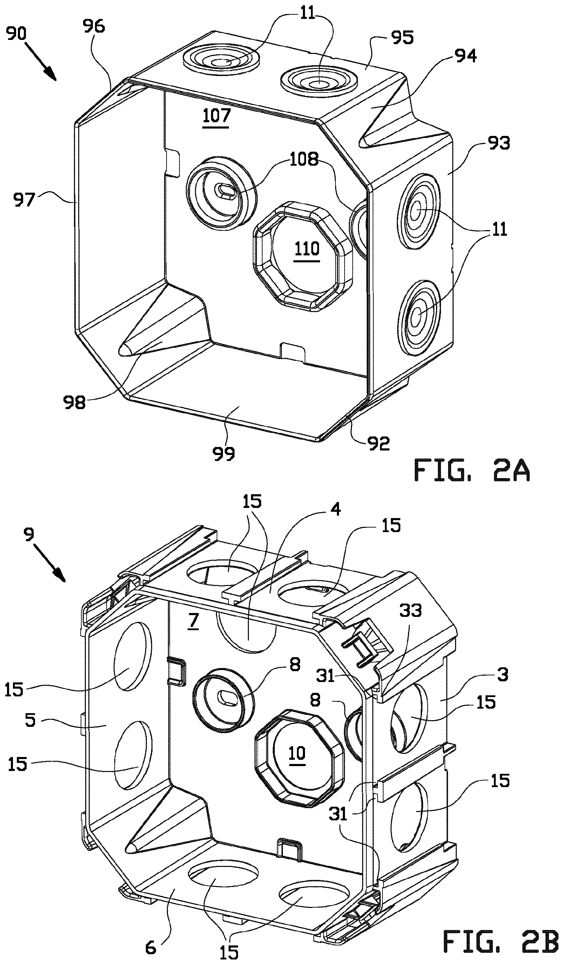

In figures 1B and 2A it can be seen that the housing 9 of the installation box 1 comprises an internal water-retaining structure 90. The water-retaining structure 90 comprises a bottom wall 107 and eight circumferential walls 92, 93, 94, 95, 96 97, 98, 99 that are upright from the bottom wall 107 and form a close-fitting watertight unity. For the purpose of clarification only the water-retaining structure 90 is shown notionally separate from the housing 9 in figures 1B and 2A, but in reality, both are tightly connected to each other. The installation box 1 is made by means of multi-component injection moulding, or 2K/3K injection moulding, in particular two-component injection moulding. The housing 9 is made of a synthetic material, preferably PP, PE, ABS or another similar suitable material. In this embodiment, the water-retaining structure 90 is made of a thermoplastic elastomer (TPE), or a soft synthetic material, that adheres well to the synthetic material of the housing 9.

As shown in figure 2B, the housing 9 is provided with several open passage openings 15 for passing the outer end of the cables 13 through in a passage direction E transverse to or substantially transverse to the passage opening 15 and/or the respective circumferential wall 3. In an embodiment that is not shown, the passage openings 15 can be closed off by closures (not shown) of the same material as the housing 9, which closures can be pushed out.

Figure 2A shows that the water-retaining structure 90 has been provided with several membranes 11 that are easy to perforate. Their soft synthetic material makes it possible to puncture said membranes 11 with the outer end of the cable 13 or a tool, such as a screwdriver. The intact membranes 11 close off the installation space in a watertight manner. After puncturing the membrane 11 with the outer end of the cable 13 in the passage direction E, the respective membrane 11 will abut the cable 13 like a closing ring clamping to the inside, wherein the membrane 11 tightly abuts the cable 13 all around over a length of a few millimetres, so that a watertight sealing is provided. The flexible membrane 11 is suitable for accommodating cables 13 of various diameters, for instance in the range of approximately 5-18 mm. The strain relief 12 is suitable for accommodating cables 13 of various diameters, for instance in the range of 8-16 mm.

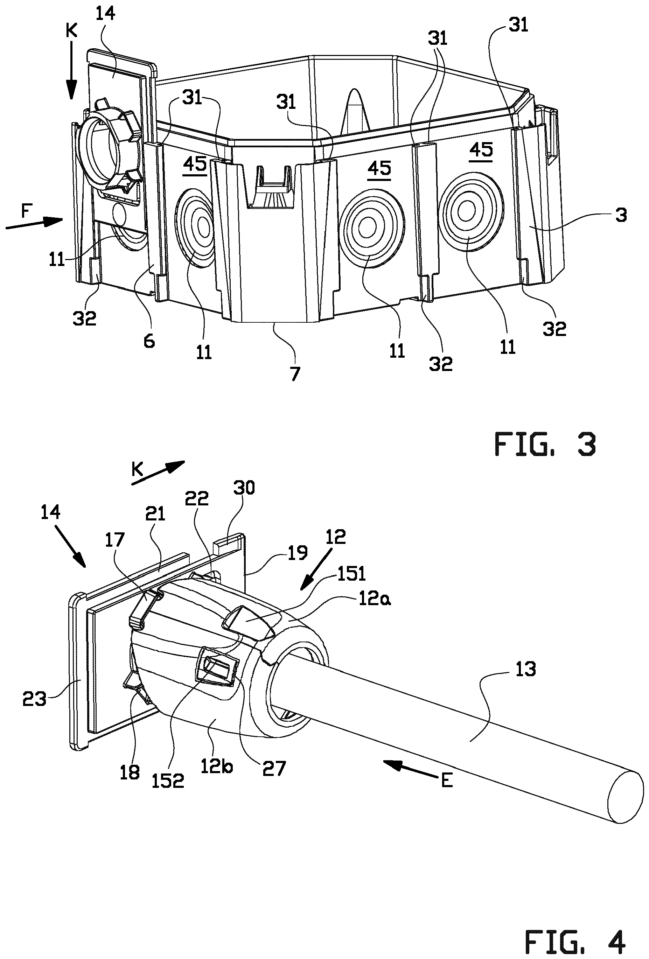

The membranes 11 of the water-retaining structure 90 are behind the passage openings 15 of the housing 9, as shown in figure 3. In the bottom wall 7 the membrane 110 has also been placed behind the passage opening 10. Figures 1A and 1B show that the water-retaining structure 90 and the housing 9 of the installation box 1 have been provided with mounting openings 8, 108 for attachment to for instance a wall of a building by means of a screw.

Figure 3 shows that the first circumferential walls 3, 4, 5, 6 of the housing 9 have been provided with slider locations 45 for sliding in the slider insert piece 14. The slider locations 45 comprise parallel slider rails 31 that end in a locking portion 32 for locking the slider insert piece 14. The slider insert piece 14 is slid into the slider location 45 in a sliding direction K, as shown in figure 3, which sliding direction K considered from above is parallel or substantially parallel to the respective circumferential wall 6 and/or perpendicular to the bottom wall 7.

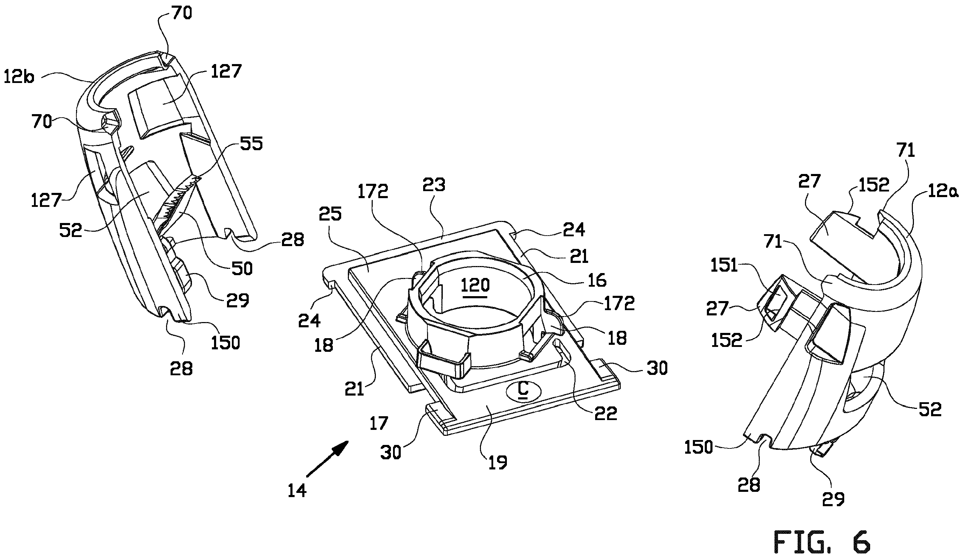

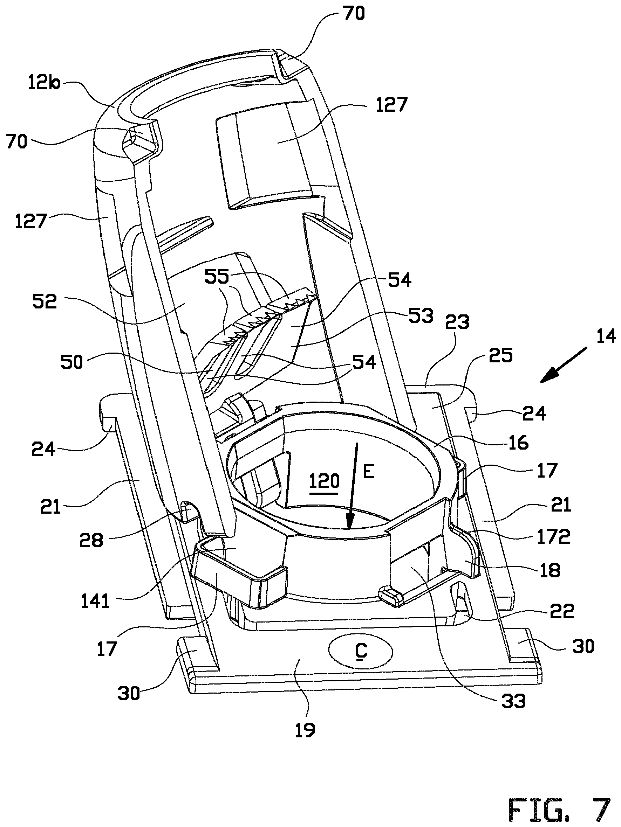

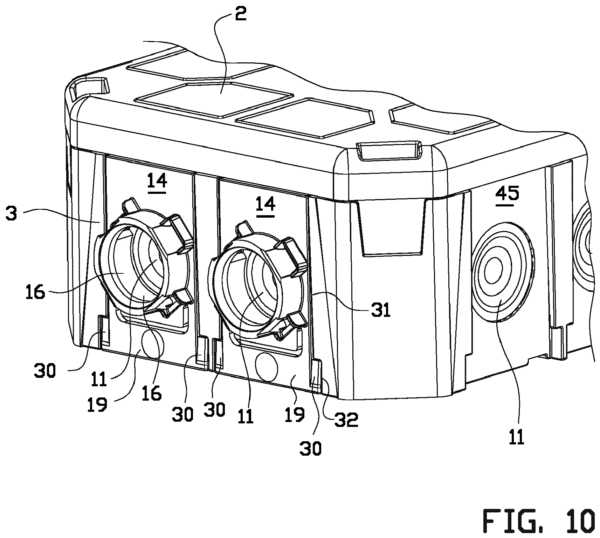

The slider insert piece 14 is shown in detail in figures 4-11A. The slider insert piece 14 comprises an elongated base body 25 having a passage opening 120 for the cable 13 therein. The base body 25 extends substantially transverse to the passage direction E of the cable 13. At the periphery of the passage opening 120 of the elongated base body 25 an edge 16 that is upright relative to the base body 25 is provided, which edge provides reinforcement to the relief members 12a, 12b that are partially attached around the upright edge 16. The slider insert piece 14 comprises first hinge members 18, in this case female hinge members 18, that are provided at the base body 25 and the periphery of the upright edge 16. As shown in figure 7, each of the first hinge members 18 of the slider insert piece 14 is bounded by an opening that can be hooked into 33 in the transition from the upright edge 16 into the base body 25. The slider insert piece 14 comprises U-shaped brackets 17 which are provided at the periphery of the upright edge 16, wherein the U-shaped brackets 17 in cooperation with the upright edge 16 bound an insertion opening 141.

At the side edges of the base body 25 of the slider insert piece 14 first slider guides 21 are provided for guiding and sliding in the slider insert piece 14 into the slider rails 31. In figures 7-9 it is shown that the slider guides 21 are provided along the opposite longitudinal sides of the base body 25. The first slider guides 21 cooperate with the slider rails 31.

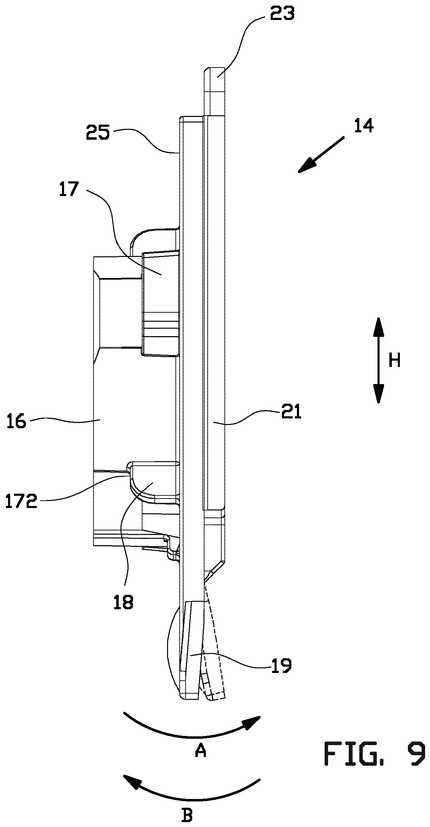

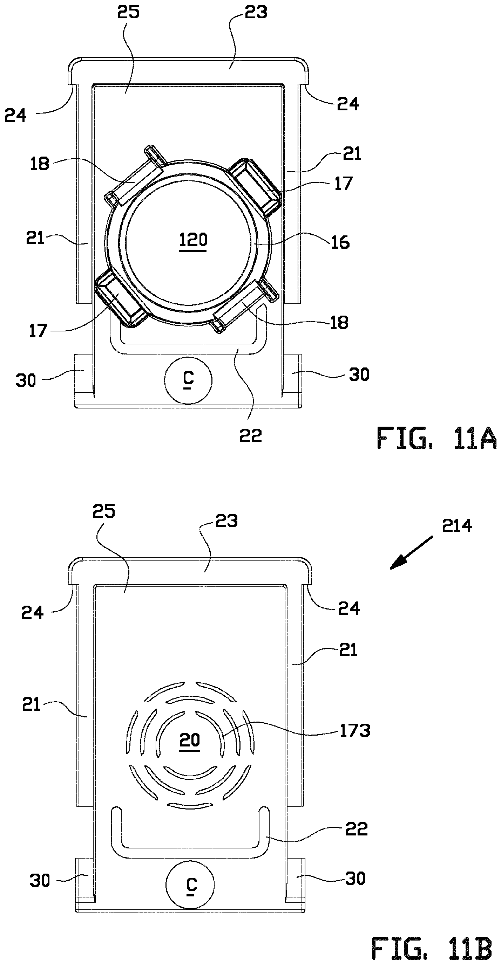

At the front side, the slider insert piece 14 comprises a locking body 19 having second slider guides 30. Figure 11A shows that the locking body 19 is in line with the base body 25. A slot 22 is provided in the slider insert piece 14, as a result of which flexible material bridges have been formed between the locking body 19 and the base body 25. When sliding in the slider insert piece 14, first the second slider guides 30 are being placed in the slider rails 31. The locking body 19 with the second slider guides 30 is then being pre-biassed relative to the base body 25 with the first slider guides 21 so as to bend to a rearward orientation A, as shown in broken lines in figure 9. The locking body 19 bending relative to the base body 25 is possible due to the elasticity of the material bridges. The second slider guides 30 taper in the height direction H, as a result of which said second slider guides 30 slide in and through slider rails 31 in a self-piloting manner, immediately followed by the first slider guides 21. The height direction H substantially corresponds with the sliding direction K. During sliding in the slider insert piece 14 the first and second slider guides 21, 30 are aligned. When the second slider guides 30 reach the locking portions 32, they are released and snap back upwards again in direction B and hook behind the slider rails 31. The locking body 19 is provided with an indicator C to indicate where a user needs to exert force if it is desirable to remove the slider insert piece 14 from the housing 9 again.

At the rear side the slider insert piece 14 is provided with a positioning device 23 with stops 24. During sliding the slider insert piece 14 in, the stops 24 contact the front side of the slider rails 31 in order to position the passage opening 120 of the slider insert piece 14 straight in front of the passage opening 11 of the housing 9.

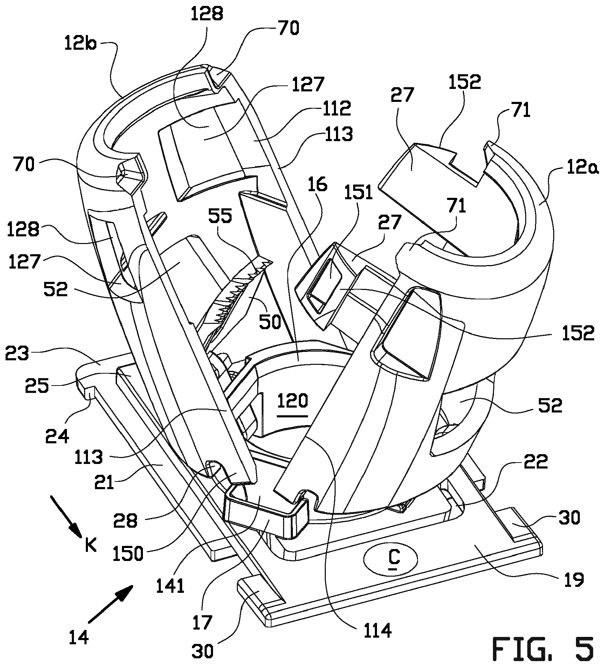

Figures 4-8 show that two relief members 12a, 12b of the strain relief 12 each comprise a wall 112 having a constant wall thickness. The relief members 12a, 12b are complementary to each other for forming a cone-shape on the exterior together with the walls 112. The relief members 12a, 12b comprise second hinge members 29 at the lower end of the wall 112, in this embodiment hook-shaped male hinge members, for cooperation with the first hinge members 18. The first and second hinge members 18, 29 together form a hinge that can be hooked into. For coupling to the slider insert piece 14, the hook-shaped second hinge members 29 are inserted through the openings that can be hooked into 33 of the first hinge members 18 of the slider insert piece 14, and hooked behind the base body 25. The relief members 12a, 12b are then able to hinge relative to the slider insert piece 14 between a closed condition, shown in figure 4, and an open condition, shown in figure 5. In the open condition the strain relief 12 is capable of accommodating the cable 13 and in the closed condition the strain relief attaches the jacket of the cable 13 to the installation box 1.

The first and second hinge members 18, 29 are configured asymmetrical because the opening 33 of the first hinge members 18 is provided with a first positioning edge 172 on one side, and the hook-shaped second hinge members 29 are provided with a second positioning edge 171 on one side. When the hook-shaped second hinge members 29 have been inserted through the opening that can be hooked into 33, the first positioning edge 172 and the second positioning edge 171 contact the relief member 12a, 12b or the slider insert piece 14, respectively, on opposite sides of the opening 33. In that way, the relief members 12a, 12b each have one fixed position around the passage opening 120.

The first relief member 12a comprises first locking elements 27 with barbs 152, which barbs extend from the longitudinal edges 113 of the wall 112 in the direction of the second relief member 12b. The second relief member 12b comprises second locking elements 127 that are configured with hook edges 128 along the openings in the wall 112. When the relief members 12a, 12b are in the closed condition, the straight longitudinal edge 113, 114 are in contact with each other and the barbs 152 hook behind the hook edges 128 for effecting a form-closed coupling. In that way, a self-locking snap connection is created. The locking elements 27, 127 are provided near the upper end of the wall 112.

The first locking elements 27 comprise a recess 151 for the insertion of for instance a screwdriver in the barb 152. In that way, the barb 152 can be pushed inwards in order to unlock it and return the relief members 12a, 12b to the open condition.

The first relief member 12a comprises protrusions 71 that are provided at the upper end of the wall 112 and that extend in the direction of the second relief member 12b. The second relief member 12b comprises recesses 70 that are provided at the upper end of the wall 112 for accommodating the protrusions 71. When the relief members 12a, 12b are in the closed condition, the protrusions 71 have been accommodated in the recesses 70 for effecting a reinforcement of the self-locking snap connection.

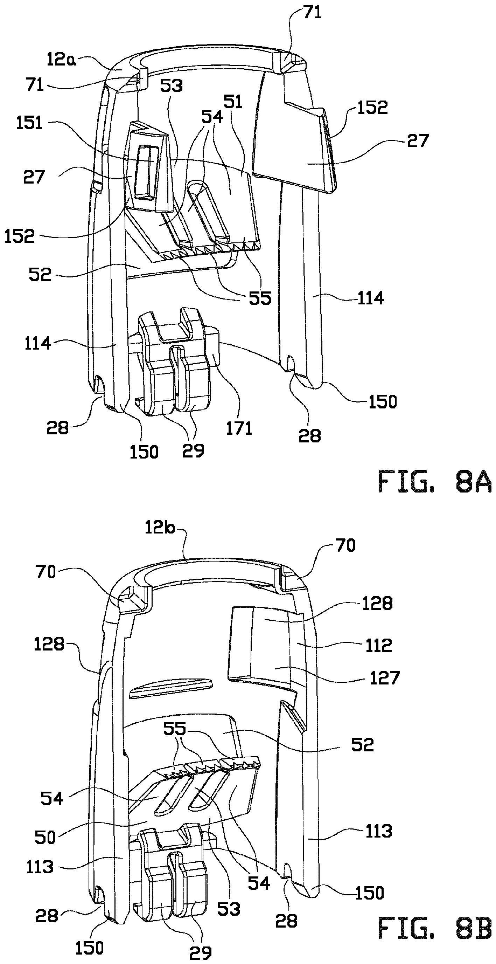

The walls 112 of the relief members 12a, 12b have each been provided with a recess 52. From the recesses 52 resilient clamping parts 50, 51 protrude in the direction of the cable 13. As can be seen in figures 8A and 8B one of the clamping parts 50 is upwardly oriented and the other one of the clamping parts 51 is downwardly oriented. Each of the clamping parts 50, 51 is provided with a clamping base 53 having three individual resilient clamping fingers 54 attached thereto. The clamping fingers 54 of each clamping part 50, 51 are oriented substantially parallel to each other with a free outer end and are at an angle to the passage direction E. In the closed condition of the relief members 12a and 12b the clamping teeth 55 engage onto the cable 13 at the free outer end of the clamping fingers 54, so that the clamping teeth 55 exert a clamping force onto the jacket of the cable 13 by means of the resilient clamping fingers 54. In the closed condition of the relief members 12a and 12b, the clamping fingers 54 of the first relief member 12a are oriented towards the passage openings 15, 120 and the clamping fingers 54 of the second relief member 12b are oriented in an opposite direction and therefore oriented away from the passage openings 15, 120. A pulling force exerted on the cable 13 in the pulling direction T or a pushing force exerted on the cable in the passage direction E, is then at least partially distributed over the resilient clamping fingers 54.

At the lower end, each wall 112 has been provided with two notches 28 and with two teeth 150. Each of the notches 28 accommodates a side of the bracket 17 of the slider insert piece 14, and the teeth 150 extend in the insertion opening 141 when the strain relief is in the closed condition. Due to the brackets 17 and the teeth 150 cooperating, it is prevented that the relief members 12a, 12b are pushed apart. The closed strain relief 12 is static all around due to, on the one hand, the teeth 150 accommodated in the insertion opening 141 and, on the other hand, due to the first and second hinge members 18, 19.

In figure 11A it can clearly be seen that the brackets 17 are provided straight opposite each other at the edge 16, and that the first hinge members 18 are provided straight opposite each other at the edge 16, together in a straight cruciform configuration. The first hinge members 18 are situated such that the hinge axis of the relief members 12a, 12b that have been hooked in, is diagonal relative to the main plane of the bottom wall 7 and/or relative to the sliding direction K of the slider insert piece 14. In case two strain reliefs 12 have been provided adjacent to each other at one of the walls of the installation box 1, as shown in figure 1A, both strain reliefs 12 can simultaneously be positioned in the open condition without contacting each other. Additionally, the relief members 12a and 12b are able to hinge sufficiently far apart from each other without contacting the wall against which the installation box 1 has been attached. In figure 11A it is clear to see that there is a space between the base body 25 and the lower end of the relief members 12a, 12b that is oriented towards the slider insert piece 14, so that a hinging motion of the relief members 12a, 12b is possible. The hinge axis of the relief members 12a, 12b is parallel to the circumferential wall 3, 4, 5, 6 in which the strain relief 12 has been inserted. The hinge axes of two adjacently placed strain reliefs 12, as shown in figure 1A, are parallel to each other.

In one embodiment that is not shown, the relief members 12a, 12b of the strain relief 12 have been attached to the installation box 1 so as to hinge directly.

Figure 11B shows a blind slider insert piece 214 for closing off the passage opening 15 of the housing 9. Just like the slider insert piece 14 of the strain relief 12 it comprises the base body 25 with the first slider guides 21, the locking body 19 with the second slider guides 30, the positioning device 23 with the stops 24 and the slot 22 for forming the material bridges between the base body 25 and the locking body 19. The blind slider insert piece 214 has been provided with a closure 20 for covering the passage opening 15 of the housing 9 and thus the membrane 11. As shown in figure 11B, the closure 20 is interrupted by circular, concentric slits 173, so that several diameters can be broken out for positioning the cable 13 without strain relief 12. Alternatively, a fully closed closure 20 is possible for completely protecting the membrane 11 from weather influences, in particular sunlight. The slider insert piece 214 with closure 20 can be replaced by the slider insert piece 14 as shown in figure 11A, so that the cable 13 can be passed through the passage opening 11.

The above description has been included to illustrate the operation of preferred embodiments of the invention and not to limit the scope of the invention. Starting from the above explanation many variations that fall within the scope of the present invention will be evident to an expert.

## Claims

1. Installation box (1) comprising a housing (9) having a bottom wall (7) and a circumferential wall (3, 103, 4, 104, 5, 105, 6, 106) that is upright from the bottom wall, the circumferential wall having an optionally closed passage opening (10, 11, 15), wherein the bottom wall and the circumferential wall jointly bound an installation space for electric wiring material which space is closed off by a cover (2), wherein the installation box comprises a strain relief (12) above the passage opening, wherein the strain relief comprises two cooperating relief members (12a, 12b) that are or can be attached to the bottom wall and/or the circumferential wall so as to hinge relative to each other, and that are capable of hinging between an open condition for passing through a cable (13) through the passage opening in a passage direction, and a closed condition in which the relief members cooperate and engage onto the cable (13), wherein the strain relief (12) comprises a slider insert piece (14) which is to be placed in front of the passage opening (11, 15) in a sliding direction (K) substantially parallel to the circumferential wall (6) and/or perpendicular to the bottom wall (7).

2. Installation box (1) according to claim 1, wherein the relief members (12a, 12b) have walls (112) that are complementary to each other for in the closed condition enveloping the cable in circumferential direction, wherein the complementary walls of the relief members (12a, 12b) in the closed condition preferably are cone-shaped.

3. Installation box (1) according to any one of the preceding claims, wherein at least one of the relief members (12a, 12b) is provided with a preferably resilient clamping part (50, 51) for clamping the cable (13) inside the strain relief (12) when the relief members (12a, 12b) are in the closed condition.

4. Installation box (1) according to claims 2 and 3, wherein a clamping part (26) is provided on the wall of each of the relief members (12a, 12b) which clamping part projects to the inside relative to the wall in order to engage the cable inside the strain relief from more than one side.

5. Installation box (1) according to claim 3 or 4, wherein the clamping part (50, 51) is formed by a clamping base (53) for attaching the clamping part (50, 51) to the respective relief member (12a, 12b), and one or more resilient clamping fingers (54) that are connected to the clamping base for clamping the cable inside the strain relief, wherein the one or more clamping fingers are oriented parallel to each other with a free outer end, wherein the free outer ends of the one or more clamping fingers of the clamping part (50, 51) of one of the relief members (12a, 12b) preferably are oriented towards the passage opening and the free outer ends of the one or more clamping fingers of the clamping part (50, 51) of the other of the relief members (12a, 12b) are oriented away from the passage opening for preventing pushing in and/or pulling out the cable inside the strain relief.

6. Installation box (1) according to claim 5, wherein the free outer ends of the one or more clamping fingers are provided with clamping teeth (55) for engaging the cable inside the strain relief, wherein when the relief members are in the closed condition, the clamping teeth (55) preferably are oriented transversely relative to the passage direction.

7. Installation box (1) according to any one of the preceding claims, wherein the slider insert piece (14) comprises a base body (25) provided with first hinge members (18) for attaching the relief members (12a, 12b) to the base body (25) so as to hinge relative to each other.

8. Installation box (1) according to any one of the preceding claims, wherein the relief members (12a, 12b) are provided with second hinge members (29) for attaching the relief members (12a, 12b) to the installation box (1) so as to hinge.

9. Installation box (1) according to claims 7 and 8, wherein the second hinge members (29) are configured for cooperation with the first hinge members (18) for attaching the relief members (12a, 12b) to the base body (25) so as to hinge, wherein the first hinge members (18) preferably are female hinge members that are bounded by an opening that can be hooked into (33) in the base body (25) and wherein the second hinge members (29) preferably are hook-shaped male hinge members.

10. Installation box (1) according to claim 9, wherein the first hinge members (18) of the slider insert piece (14) and/or the second hinge members (29) of the relief members (12a, 12b) ensure hinging about a hinge axis that runs substantially diagonally relative to the sliding direction of the slider insert piece (14).

11. Installation box (1) according to any one of the preceding claims, wherein the bottom wall and/or the circumferential wall of the housing comprises slider rails (31) along the passage opening (10, 15), wherein the slider insert piece (14) comprises a base body (25) having first slider guides (21) that cooperate with the slider rails (31) for sliding the slider insert piece (14) into the slider rails (31) and guiding it in there, wherein the slider rails (31) preferably end in a locking portion (32) for locking the slider insert piece (14) that has been slid in.

12. Installation box (1) according to claim 11, wherein the slider insert piece (14) comprises a locking body (19) with second slider guides (30) which locking body is connected to the base body (25) of the slider insert piece (14) for locking the slider insert piece (14) in the slider rails (31), wherein the slider insert piece (14) preferably comprises a slot (22) between the base body (25) and the locking body (19) for forming flexible material bridges between the base body (25) and the locking body (19).

13. Installation box (1) according to any one of the preceding claims, wherein the slider insert piece comprises a base body (25) having a passage opening (120) for the cable (13), wherein an edge (16) that is upright relative to the base body (25) is provided at the periphery of the passage opening (120).

14. Installation box (1) according to any one of the preceding claims, wherein the slider insert piece (14) comprises a base body (25) that is provided with insertion openings (141), wherein the relief members (12a, 12b) are provided with teeth (150) cooperating with the insertion openings (141).

15. Installation box (1) according to claims 7 and 13 and 14, wherein the first hinge members (18) and the insertion openings (141) are provided at the periphery of the upright edge (16), wherein the insertion openings (141) are provided straight opposite each other at the edge (16), and the first hinge members (18) are provided straight opposite each other at the edge (16), together in a straight cruciform configuration.
